# EUROPEAN PATENT APPLICATION

(11) **EP 4 297 304 A1**
(43) Date of publication of application: **27.12.2023**
(21) Application number: 23179102.1
(22) Date of filing: 14.06.2023
(51) Int. Cl.: H04J 14/02

(54) **OPTICAL NETWORK TERMINAL AND OPERATING METHOD THEREOF**

(30) Priority: 20.06.2022 CN 202210701300
(71) Applicant: Sercomm Corporation, Taipei 115 (TW); Sernet (Suzhou) Technologies Corporation, Suzhou, Jiangsu 215021 (CN)
(72) Inventor: GU, JingWen, Suzhou, Jiangsu, 215021 (CN); GE, Zhixin, Suzhou, Jiangsu, 215021 (CN)
(74) Representative: Krauns, Christian

(57) **Abstract**

An optical network terminal and an operating method thereof are provided. The optical network terminal includes a Wavelength Division Multiplexer (WDM) connected to an optical line terminal, a first photoelectric conversion circuit, a second photoelectric conversion circuit, a downlink branch circuit, a processing circuit and an uplink branch circuit. The first photoelectric conversion circuit and the second photoelectric conversion circuit are connected to the WDM. The downlink branch circuit has a first input port connected to the first photoelectric conversion circuit, a second input port connected to the second photoelectric conversion circuit and a downlink output port. The processing circuit is connected between the downlink output port and a local network terminal. The uplink branch circuit has an uplink input port connected to the processing circuit, a first output port connected to the first photoelectric conversion circuit and a second output port connected to the second photoelectric conversion circuit.

## Description

### TECHNICAL FIELD

The disclosure relates in general to an optical network terminal and an operating method thereof, and more particularly to a multi-standard optical network terminal and an operating method thereof.

### BACKGROUND

With the development of optical communication technology, the speed of network communication continues to increase. Generally speaking, the optical signal from the optical network needs to be converted into an electronic signal through an optical network terminal (ONT) to input to the local network. With the improvement of the optical communication technology, when the communication standard adopted by a certain node of the optical network is not compatible with the existing optical network terminal, all optical network terminals connected to this node need to be replaced, which not only causes waste of hardware costs, but also requires a lot of manpower to install.

In addition, under the development trend of globalization, the optical network terminal must be applicable to various communication standards, so as to cope with the adoption of different communication standards in different regions.

### SUMMARY

The disclosure is directed to an optical network terminal and an operating thereof. A fork metal trace and a photoelectric conversion circuit are used, so that the optical network terminal can be applied to a variety of communication standards, in response to different application environments or network deployment conditions in different regions. In addition, when the optical network changes the communication standard, the optical network terminal can also be switched automatically, which not only does not cause waste of hardware costs, but also does not require labor costs for reinstallation.

According to one embodiment, an optical network terminal (ONT) is provided. The optical network terminal includes a Wavelength Division Multiplexer (WDM), a first photoelectric conversion circuit, a second photoelectric conversion circuit, a downlink branch circuit, a processing circuit and an uplink branch circuit. The wavelength division multiplexer is connected to an optical line terminal (OLT). The first photoelectric conversion circuit is connected to the wavelength division multiplexer. The second photoelectric conversion circuit is connected to the wavelength division multiplexer. The downlink branch circuit has a first input port, a second input port and a downlink output port. The first input port is connected to the first photoelectric conversion circuit. The second input port is connected to the second photoelectric conversion circuit. One end of the processing circuit is connected to the downlink output port of the downlink branch circuit, and another end of the processing circuit is connected to a local network terminal. The uplink branch circuit has an uplink input port, a first output port and a second output port. The uplink input port is connected to the processing circuit. The first output port is connected to the first photoelectric conversion circuit. The second output port is connected to the second photoelectric conversion circuit.

According to another embodiment, an operating method of an optical network terminal (ONT) is provided. The operating method includes the following steps. A processing circuit determines whether a first optical signal exists according to a first detection signal from a first photoelectric conversion circuit. The processing circuit determines whether a second optical signal exists according to a second detection signal from a second photoelectric conversion circuit. If the first optical signal exists, the processing circuit establishes a first path through a first control signal and a second control signal. If the second optical signal exists, the processing circuit establishes a second path through the first control signal and the second control signal. the first optical signal and the second optical signal do not exist simultaneously.

### BRIEF DESCRIPTION OF THE DRAWINGS

FIG. 1 schematically illustrates an optical network terminal (ONT) (or called Optical Network Unit, ONU) according to an embodiment.
FIG. 2 shows a schematic diagram of the optical network terminal according to an embodiment.
FIG. 3 shows a downlink branch circuit according to one embodiment.
FIG. 4 shows an uplink branch circuit according to one embodiment.
FIG. 5 shows a state machine diagram of the optical network terminal according to an embodiment.
FIG. 6 shows a flow chart of an operation method for connecting the local network and the optical network according to an embodiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

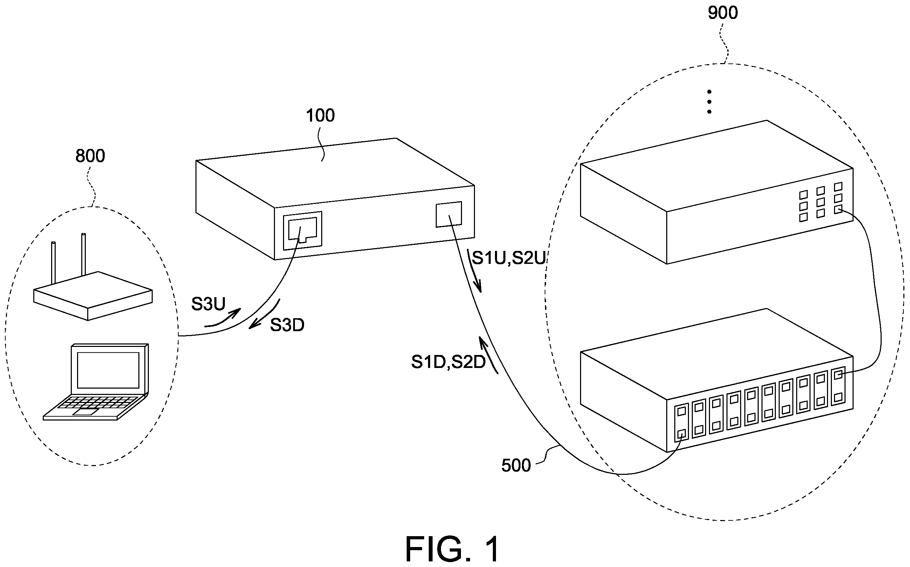

Please refer to FIG. 1, which schematically illustrates an optical network terminal (ONT) (or called Optical Network Unit, ONU) 100 according to an embodiment. The optical network terminal 100 is used to connect a local network 800 and an optical network 900. The local network 800 includes one or more devices that use electronic signals for communication, and the optical network 900 includes one or more devices that use optical signals for communication. The optical signal is transmitted between the optical network 900 and the optical network terminal 100 through the optical fiber 500. The uplink optical signal can be a first optical signal S1U or a second optical signal S2U, and the downlink optical signal can be a first optical signal S1D or a second optical signal S2D. For example, the first optical signal S1U, S1D are Gigabit-Capable Passive Optical Network (GPON) standard or the Ethernet Passive Optical Network (EPON) standard compliant signals, the second optical signal S2U, S2D are the XGS-PON standard or the 10G EPON standard compliant signals. The optical signals S1U, S1D, S2U and S2D may have the same or different optical wavelengths respectively. For example, the first optical signal S1U, S1D and the second optical signal S2U, S2D could have different light wavelengths.

In the downlink direction, the optical network terminal 100 could convert the first optical signal S1D or the second optical signal S2D into an electronic signal S3D, and transmit the electronic signal S3D to the local network 800. In the uplink direction, the optical network terminal 100 could convert the electronic signal S3U into the first optical signal S1U or the second optical signal S2U, and transmit the first optical signal S1U or the second optical signal S2U to the optical network 900.

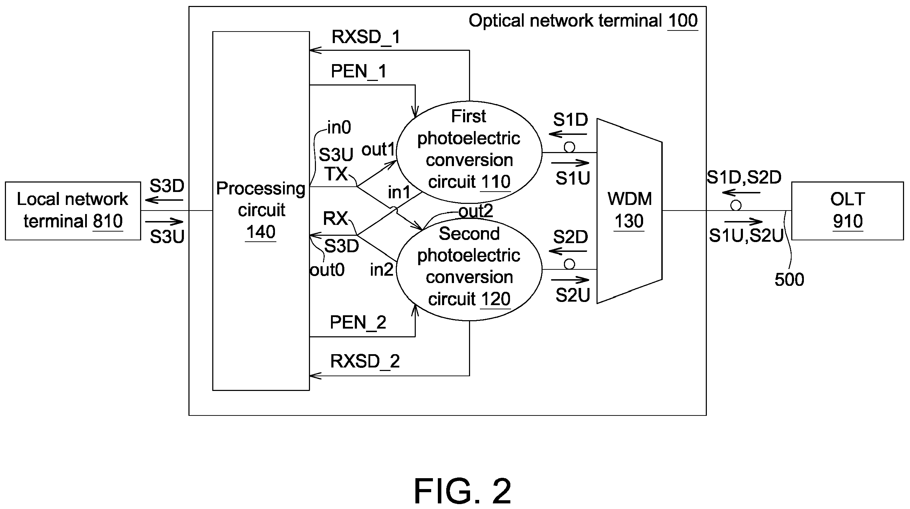

Please refer to FIG. 2, which shows a schematic diagram of the optical network terminal 100 according to an embodiment. The optical network terminal 100 includes a Wavelength Division Multiplexer (WDM) 130, a first photoelectric conversion circuit 110, a second photoelectric conversion circuit 120, a downlink branch circuit RX, an uplink branch circuit TX and a processing circuit 140. The wavelength division multiplexer 130 is connected to an optical line terminal (OLT) 910 through the optical fiber 500. Both of the first photoelectric conversion circuit 110 and the second photoelectric conversion circuit 120 are connected to the wavelength division multiplexer 130. The uplink branch circuit TX has an uplink input port in0, a first output port out1 and a second output port out2, respectively connected to the processing circuit 140, the first photoelectric conversion circuit 110 and the second photoelectric conversion circuit 120. The downlink branch circuit RX has a first input port in1, a second input port in2 and a downlink output port out0, respectively connected to the first photoelectric conversion circuit 110, the second photoelectric conversion circuit 120 and the processing circuit 140. In addition, the processing circuit 140 can be connected to the local network terminal 810 in a wired or wireless manner. The processing circuit 140 may include a processor and a transceiver, and the processing circuit 140 may be realized in the form of a microcontroller, a microprocessor, an electronic signal conversion circuit and/or other circuit elements. The optical network terminal 100 and the local network terminal 810 can be connected through connectors and/or wireless transceiver interfaces.

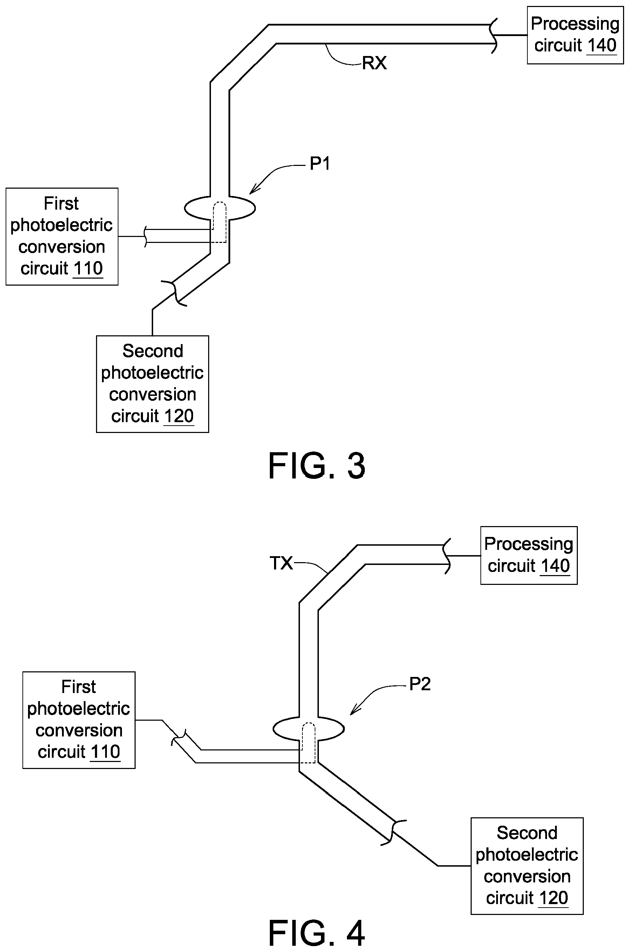

Please referring to FIG. 3 and FIG. 4, FIG. 3 shows the downlink branch circuit RX according to one embodiment, and FIG. 4 shows the uplink branch circuit TX according to one embodiment. In one embodiment, the first photoelectric conversion circuit 110, the second photoelectric conversion circuit 120 and the processing circuit 140 are arranged on a circuit board. The downlink branch circuit RX and the uplink branch circuit TX can be respectively realized by at least one of a passive device and a metal trace on the circuit board respectively. The downlink branch circuit RX is a Y-shaped line superimposed by double-layers wiring. The total length of the downlink branch circuit RX is less than 3000 mil. In addition, the width of the downlink branch circuit RX is the same, for example, 5 mil, to maintain the required impedance, such as the characteristic impedance of 100Ω±10%. Furthermore, in one embodiment, the fork point P1 of the downlink branch circuit RX could be set near the first photoelectric conversion circuit 110, and the distance between the fork point P1 of the downlink branch circuit RX and the first photoelectric conversion circuit 110 is less than or equal to 400mil.

In this embodiment, the uplink branch circuit TX is a Y-shaped line superimposed by double-layers wiring, so that the total length of the uplink branch circuit TX can be less than 3000 mil. In addition, the width of the uplink branch circuit TX is the same, for example, 5 mil, to maintain the required impedance, such as the characteristic impedance is kept at 100Ω±10%. Furthermore, in one embodiment, the fork point P2 of the uplink branch circuit TX could be set near the first photoelectric conversion circuit 110, and the distance between the fork point P2 of the uplink branch circuit TX and the first photoelectric conversion circuit 110 is less than or equal to 400mil.

Furthermore, the downlink branch circuit RX and the uplink branch circuit TX are not connected to each other, and the downlink branch circuit RX and the uplink branch circuit TX could have the same width, length and shape.

In order to avoid being affected by the overheating of the processing circuit 140, the first photoelectric conversion circuit 110 and the processing circuit 140 need to be separated by a predetermined distance, for example, 2000 mil; the second photoelectric conversion circuit 120 and the processing circuit 140 need to be separated by a predetermined distance, such as 1500 mil.

In the downlink direction, when the wavelength division multiplexer 130 receives the first optical signal S1D, the wavelength division multiplexer 130 transmits the first optical signal S1D to the first photoelectric conversion circuit 110. The first photoelectric conversion circuit 110 converts the first optical signal S1D into the electronic signal S3D, and transmits the electronic signal S3D to the processing circuit 140 through the downlink branch circuit RX. When the wavelength division multiplexer 130 receives the second optical signal S2D, the wavelength division multiplexer 130 transmits the second optical signal S2D to the second photoelectric conversion circuit 120. The second photoelectric conversion circuit 120 converts the second optical signal S2D into the electronic signal S3D, and transmits the electronic signal S3D to the processing circuit 140 through the downlink branch circuit RX.

In the uplink direction, the processing circuit 140 simultaneously transmits the electronic signal S3U to the first photoelectric conversion circuit 110 and the second photoelectric conversion circuit 120 through the uplink branch circuit TX. When the first photoelectric conversion circuit 110 is enabled, the first photoelectric conversion circuit 110 converts the electronic signal S3U into the first optical signal S1U, and transmits the first optical signal S1U to the wavelength division multiplexer 130. When the second photoelectric conversion circuit 120 is enabled, the second photoelectric conversion circuit 120 converts the electronic signal S3U into the second optical signal S2U, and transmit the second optical signal S2U to the wavelength division multiplexer 130. Then, the wavelength division multiplexer 130 transmits the first optical signal S1U or the second optical signal S2U to the optical line terminal (OLT) 910 through the optical fiber 500.

As shown in FIG. 2, the first photoelectric conversion circuit 110 and the second photoelectric conversion circuit 120 could be BiDirectional Optical Sub-Assembly (BOSA) for converting the optical signal to the electronic signal and converting the electronic signal to the optical signal.

In the downlink direction, after the first photoelectric conversion circuit 110 receives the first optical signal S1D, the first photoelectric conversion circuit 110 converts the first optical signal S1D into the electronic signal S3D. After the second photoelectric conversion circuit 120 receives the second optical signal S2D, the second photoelectric conversion circuit 120 converts the second optical signal S2D into the electronic signal S3D.

In the uplink direction, after the first photoelectric conversion circuit 110 receives the electronic signal S3U, the first photoelectric conversion circuit 110 converts the electronic signal S3U into the first optical signal S1U. After the second photoelectric conversion circuit 120 receives the electronic signal S3U, the second photoelectric conversion circuit 120 converts the electronic signal S3U into the second optical signal S2U.

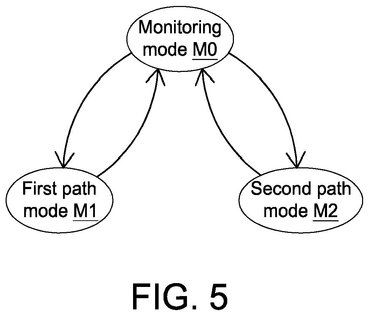

As shown in FIG. 2, in the downlink direction, no matter the optical network terminal 100 receives the first optical signal S1D (the GPON standard or the EPON standard compliant signals), or the second optical signal S2D (the XGS-PON standard or the 10G EPON compliant signals), the first optical signal S1D or the second optical signal S2D could be converted into the electronic signal S3D through the first photoelectric conversion circuit 110 or the second photoelectric conversion circuit 120. In the uplink direction, no matter the optical line terminal 910 transmits the GPON standard, EPON standard, XGS-PON standard or 10G EPON standard compliant signals, the optical network terminal 100 could convert the electronic signal S3U to the first optical signal S1U or the second optical signal S2U through the first photoelectric conversion circuit 110 or the second photoelectric conversion circuit 120. The operation of the optical network terminal 100 will be described in detail through the state machine diagram of FIG. 5.

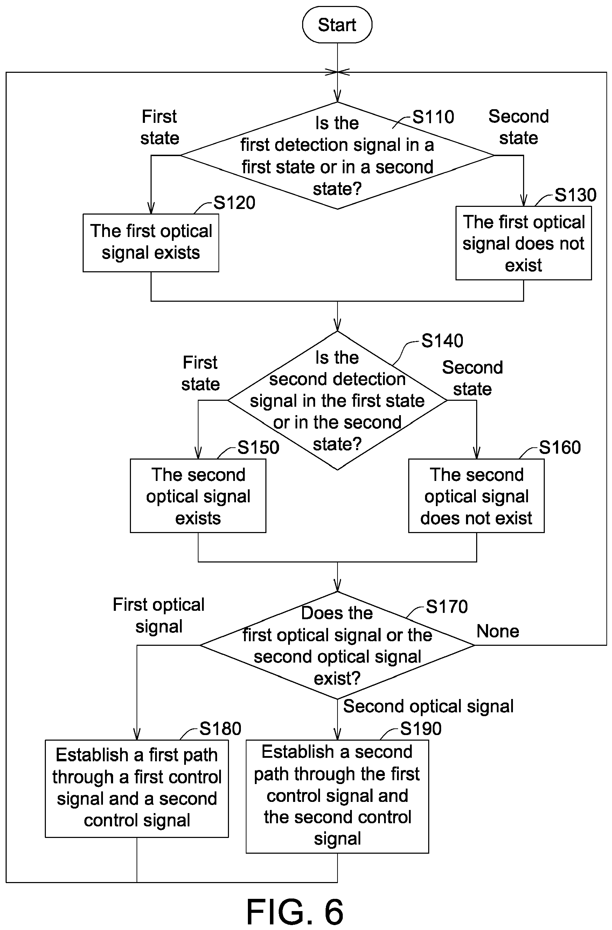

Please refer to FIG. 5, which shows a state machine diagram of the optical network terminal 100 according to an embodiment. The optical network terminal 100 has a monitoring mode M0, a first path mode M1 and a second path mode M2. When the optical network terminal 100 is turned on, the optical network terminal 100 enters the monitoring mode M0. When the optical network terminal 100 determines that the first optical signal S1D exists, the optical network terminal 100 will enter the first path mode M1, so as to enable the first photoelectric conversion circuit 110 and disable the second photoelectric conversion circuit 120; when the optical network terminal 100 determines that the second optical signal S2D exists, the optical network terminal 100 will enter the second path mode M2 to disable the first photoelectric conversion circuit 110 and enable the second photoelectric conversion circuit 120. When the optical line terminal 910 changes the communication standard, the optical network terminal 100 automatically resets or automatically restarts, and returns to the monitoring mode M0 to switch between the first path mode M1 and the second path mode M2. The following flowchart in FIG. 6 will be used to describe in detail the operation of the optical network terminal 100.

Please refer to FIG. 6, which shows a flow chart of an operation method for connecting the local network 800 and the optical network 900 according to an embodiment. In steps S110 to S130, as shown in FIG. 2, the processing circuit 140 determines whether the first optical signal S1D exists according to the first detection signal RXSD_1 from the first photoelectric conversion circuit 110. When the wavelength division multiplexer 130 receives the first optical signal S1D, the wavelength division multiplexer 130 will transmit the first optical signal S1D to the first photoelectric conversion circuit 110. When the first photoelectric conversion circuit 110 receives the first optical signal S1D, the first photoelectric conversion circuit 110 will correspondingly send the first detection signal RXSD_1 to the processing circuit 140.

In the step S110, the processing circuit 140 determines that whether the first detection signal RXSD_1 is in a first state, such as a first signal level, or in a second state, such as a second signal level, and accordingly proceeds to the step S120 or the step S130. The first detection pin of the processing circuit 140 is used to receive the first detection signal RXSD_1. The first detection pin could be different from the pin connected to the downlink branch circuit RX or the pin connected to the uplink branch circuit TX. In step S120, it is deemed that the first optical signal S1D exists; in step S130, it is deemed that the first optical signal S1D does not exist. For example, when the first detection signal RXSD_1 is at a high level, it is deemed that the first photoelectric conversion circuit 110 has received the first optical signal S1D; when the first detection signal RXSD_1 is at a low level, it is deemed that the first photoelectric conversion circuit 110 has not receive the first optical signal S1D.

Next, in the steps S140 to S160, the processing circuit 140 determines whether the second optical signal S2D exists according to the second detection signal RXSD_2 from the second photoelectric conversion circuit 120. When the wavelength division multiplexer 130 receives the second optical signal S2D, the wavelength division multiplexer 130 will transmit the second optical signal S2D to the second photoelectric conversion circuit 120. When the second photoelectric conversion circuit 120 receives the second optical signal S2D, the second photoelectric conversion circuit 120 will correspondingly send the second detection signal RXSD_2 to the processing circuit 140. In the step S140, the processing circuit 140 determines that whether the second detection signal RXSD_2 is in the first state or in the second state and accordingly proceeds to the step S150 or the step S160. The second detection pin of the processing circuit 140 is used for receiving the second detection signal RXSD_2. The second detection pin could be different from the pin connected to the downlink branch circuit RX or the pin connected to the uplink branch circuit TX.

In the step S150, it is deemed that the second optical signal S2D exists; in the step S160, it is deemed that the second optical signal S2D does not exist. For example, when the second detection signal RXSD_2 is at a high level, it is deemed that the second photoelectric conversion circuit 120 has received the second optical signal S2D; when the second detection signal RXSD_2 is at a low level, it is deemed that the second photoelectric conversion circuit 120 has not receive the second optical signal S2D.

Then, in the step S170, the processing circuit 140 determines whether the first optical signal S1D or the second optical signal S2D exists. If the first optical signal S1D exists, the process proceeds to the step S180; if the second optical signal S2D exists, the process proceeds to the step S190; if both of the first optical signal S1D and the second optical signal S2D do not exist, the process returns to the step S110. During the operation, since the optical line terminal 910 only provides one optical signal, the first optical signal S1D and the second optical signal S2D will not exist at the same time.

In the step S180, the processing circuit 140 establishes a first path through the first control signal PEN_1 and the second control signal PEN_2. The processing circuit 140 outputs the first control signal PEN_1 to the first photoelectric conversion circuit 110, so as to enable the first photoelectric conversion circuit 110. In addition, the processing circuit 140 outputs the second control signal PEN_2 to the second photoelectric conversion circuit 120, so as to disable the second photoelectric conversion circuit 120.

That is to say, the processing circuit 140 enables the first photoelectric conversion circuit 110 and disables the second photoelectric conversion circuit 120 through the first control signal PEN_1 and the second control signal PEN_2 to establish the first path. When the second photoelectric conversion circuit 120 is disabled, energy loss can be reduced. After the first path is established, the downlink first optical signal S1D could be converted into the electronic signal S3D at the first path, and then the electronic signal S3D is transmitted to the processing circuit 140; the uplink electronic signal S3U could be converted into the first optical signal S1U at the first path, and then the first optical signal S1U is transmitted to the wavelength division multiplexer 130.

In the step S190, the processing circuit 140 establishes a second path through the first control signal PEN_1 and the second control signal PEN_2. The processing circuit 140 outputs the first control signal PEN_1 to the first photoelectric conversion circuit 110 to disable the first photoelectric conversion circuit 110. When the first photoelectric conversion circuit 110 is disabled, energy loss can be reduced. In addition, the processing circuit 140 outputs the second control signal PEN_2 to the second photoelectric conversion circuit 120, so as to enable the second photoelectric conversion circuit 120.

That is to say, the processing circuit 140 disables the first photoelectric conversion circuit 110 and enables the second photoelectric conversion circuit 120 through the first control signal PEN_1 and the second control signal PEN_2 to establish the second path. After the second path is established, the downlink second optical signal S2D could be converted into the electronic signal S3D at the second path, and then the electronic signal S3D is transmitted to the processing circuit 140; the uplink electronic signal S3U could be converted into the second optical signal S2U at the second path, and then the second optical signal S2U is transmitted to the wavelength division multiplexer 130.

According to the above-mentioned embodiment, the optical network terminal 100 utilizes the design of the fork circuit and the control of the photoelectric conversion circuit, so that the optical network terminal 100 could be applicable to multiple communication standards, so as to respond to the network deployment situation in different regions. In addition, when the optical network 900 changes the communication standard, the optical network terminal 100 could also switch automatically, which not only does not cause waste of hardware costs, but also does not require labor costs for reinstallation.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. An optical network terminal (ONT) (100), **characterized in that** the optical network terminal (100) comprises:
a Wavelength Division Multiplexer (WDM) (130), connected to an optical line terminal (OLT) (910);
a first photoelectric conversion circuit (110), connected to the wavelength division multiplexer (130);
a second photoelectric conversion circuit (120), connected to the wavelength division multiplexer (130);
a downlink branch circuit (RX), having:
a first input port (in1), connected to the first photoelectric conversion circuit (110);
a second input port (in2), connected to the second photoelectric conversion circuit (120); and
a downlink output port (out0);
a processing circuit (140), wherein one end of the processing circuit (140) is connected to the downlink output port (out0) of the downlink branch circuit (RX), and another end of the processing circuit (140) is connected to a local network terminal (810); and
an uplink branch circuit (TX), having:
an uplink input port (in0), connected to the processing circuit (140);
a first output port (out1), connected to the first photoelectric conversion circuit (110); and
a second output port (out2), connected to the second photoelectric conversion circuit (120).

2. The optical network terminal according to claim 1, wherein the downlink branch circuit and the uplink branch circuit respectively comprise at least one of a passive device and a metal trace on a circuit board.

3. The optical network terminal according to claim 1 or 2, wherein
the processing circuit is configured to determine whether a first optical signal exists according to a first detection signal from the first photoelectric conversion circuit;
the processing circuit is further configured to determine whether a second optical signal exists according to a second detection signal from the second photoelectric conversion circuit;
the processing circuit is further configured to establish a first path through a first control signal and a second control signal when the processing circuit determines the first optical signal exists; and
the processing circuit is further configured to establish a second path through the first control signal and the second control signal when the processing circuit determines the second optical signal exists;
wherein the first optical signal and the second optical signal do not exist simultaneously.

4. The optical network terminal according to claim 3, wherein when the processing circuit establishes the first path,
the processing circuit outputs the first control signal to the first photoelectric conversion circuit to enable the first photoelectric conversion circuit; and
the processing circuit outputs the second control signal to the second photoelectric conversion circuit to disable the second photoelectric conversion circuit.

5. The optical network terminal according to claim 3, wherein when the processing circuit establishes the second path,
the processing circuit outputs the first control signal to the first photoelectric conversion circuit to disable the first photoelectric conversion circuit; and
the processing circuit outputs the second control signal to the second photoelectric conversion circuit to enable the second photoelectric conversion circuit.

6. The optical network terminal according to anyone of the claims 3 to 5, wherein the first optical signal complies with a Gigabit-Capable Passive Optical Network (GPON) standard or an Ethernet Passive Optical Network (EPON) standard.

7. The optical network terminal according to anyone of the claims 3 to 6, wherein the second optical signal complies with an XGS-PON standard or a 10G EPON standard.

8. An operating method of an optical network terminal (ONT) (100), **characterized in that** the operating method comprises:
determining, by a processing circuit (140), whether a first optical signal (S1D) exists according to a first detection signal (RXSD_1) from a first photoelectric conversion circuit (110);
determining, by the processing circuit (140), whether a second optical signal (S2D) exists according to a second detection signal (RXSD_2) from a second photoelectric conversion circuit (120);
establishing, by the processing circuit (140), a first path through a first control signal (PEN_1) and a second control signal (PEN_2), when the processing circuit determines the first optical signal (S1D) exists; and
establishing, by the processing circuit (140), a second path through the first control signal (PEN_1) and the second control signal (PEN_2), when the processing circuit determines the second optical signal (S2D) exists;
wherein the first optical signal (S1D) and the second optical signal (S2D) do not exist simultaneously.

9. The operating method according to claim 8, wherein the step of establishing the first path includes:
outputting, by the processing circuit, the first control signal to the first photoelectric conversion circuit to enable the first photoelectric conversion circuit; and
outputting, by the processing circuit, the second control signal to the second photoelectric conversion circuit to disable the second photoelectric conversion circuit.

10. The operating method according to claim 8, wherein the step of establishing the second path includes:
outputting, by the processing circuit, the first control signal to the first photoelectric conversion circuit to disable the first photoelectric conversion circuit; and
outputting, by the processing circuit, the second control signal to the second photoelectric conversion circuit to enable the second photoelectric conversion circuit.
